# EUROPEAN PATENT APPLICATION

(11) **EP 0 967 415 A2**
(43) Date of publication of application: **29.12.1999**
(21) Application number: 99304196.1
(22) Date of filing: 28.05.1999
(51) Int. Cl.: F16H 48/28

(54) **Differential gear device**

(30) Priority: 24.06.1998 JP 19372498
(71) Applicant: ZEXEL CORPORATION, Tokyo (JP)
(72) Inventor: Nishiji, Makoto, c/o Zexel Torsen SA, La Louvière (BE); Okuda, Hirofumi, c/o Konan Fact. of Zexel Corp., Osato-gun, Saitama-ken (JP)
(74) Representative: Carter, Stephen John

(57) **Abstract**

A gear differential having a housing (10) comprised of a body (20) whose one end is open and whose the other end has a bottom portion (21), and a closure member (30) for closing the opening portion at one end of the body (20). The body (20) is formed with an insert hole (23) into which a leg portion (81b) of a bolt (81) is inserted, and a counter bore (24) for receiving a head portion (81a) of the bolt (81). The closure member (30) is formed with a threaded hole (33) with which the leg portion 81b of the bolt 81 is threadingly engaged.

## Description

This invention relates to a differential gear device suited to be used for vehicles.

In general, differential gear devices includes a housing driven for rotation and a differential gear mechanism received in this housing. This housing includes a sleeve-like body whose one end is open and whose the other end has a bottom portion, and a closure member for closing the opening portion at one end of the body. The closure member is fixed to the body by a bolt extending through the closure member and threadingly engaged with the body. A flange portion is formed on an outer periphery of the other end of the body. This flange portion is provided with a ring gear. When the ring gear is driven for rotation by an engine, the housing is rotated about a rotational axis thereof.

In the case where the differential gear device is used for vehicles, the former is inserted in a differential carrier. For inserting the differential gear device in the differential carrier, first, the differential gear device is inclined such that the closure member side is more proximate to an axis of the differential carrier than the flange portion side. Then, with the differential gear device held in the inclined state, that portion of the differential gear device on the closure member side is inserted in the differential carrier. Thereafter, the differential gear device is rotated about its end on the closure member side until a rotational axis of the differential gear device comes into alignment with the axis of the differential carrier. By this, the whole differential gear device is inserted in the differential carrier.

The above procedure is adopted because of the following reasons. If the portion of the differential gear device on the closure member side should be inserted in the differential carrier after the portion of the flange portion side is inserted therein, the flange portion would greatly change its attitude within the differential carrier as the differential gear device is rotated. Besides, the differential carrier is large in diameter. Therefore, the differential carrier is inevitably large in size. By adopting the above procedure, it is attempted to make the differential carrier small in size.

In the conventional different gear devices, the head portion of the bolt for fixing the closure member projects from an end face of the closure member. Therefore, there is no other way but to make the differential carrier large in size in order to prevent the head portion of the bolt from interfering with the differential carrier when the end portion of the differential gear device on the closure member side is inserted in the differential carrier. Thus, the requirement for making the differential carrier smaller in size is unable to be fulfilled. Moreover, the degree of freedom in design is limited because the differential carrier must be so designed as to prevent the bolt from interfering with the differential carrier.

A differential gear device according to the present invention comprises:
a housing driven for rotation about a rotational axis thereof, and a differential gear mechanism disposed within the housing; the housing including a sleeve-like body having an open end through which the differential gear mechanism can be assembled into the housing, and a closure member which can be secured across the open end of the body, to hold the differential gear mechanism within the housing;
the closure member being secured to the body by one or more bolts extending through the body and engaged in a threaded hole formed in the closure member.

Typically, the body will be provided with a flange portion on an outer periphery of the other end portion thereof opposite to its open end.

The differential gear mechanism disposed within the housing may include a pair of side gears rotatably disposed on the housing with an axis thereof aligned with the rotational axis of the housing and a planetary gear rotatably disposed within the housing connecting the pair of side gears together such that the side gears can rotate in opposite directions relative to each other.

The or each bolt for fixing the closure member to one end face of the body may have a leg portion and a head portion.

The body is preferably formed with an insert hole extending therethrough parallel to the rotational axis, the leg portion of the bolt being inserted all the way through the insert hole from the end of the body opposite the open end, to be engaged in the threaded hole.

In the differential gear device according to the present invention, the bottom portion and the flange portion may be integral with the body. It is also possible for the body to comprise a sleeve member and an end plate which are separate from each other, the bottom portion and flange portion being formed on the end plate.

It is preferred that an opening portion of the insert hole on the other end side of the body is formed with a counter bore for receiving the head portion of the bolt. In the case where the body is comprised of a sleeve member and an end plate, the counter bore may conveniently be formed on the end plate.

As is normal, a pair of planetary gears arranged in parallel to the rotational axis may be used, the pair of planetary gears being in mesh with not only the pair of side gears but also each other.

Preferably, the body is formed on an inner peripheral surface thereof with a pair of pockets and on the bottom portion with a pair of receiving holes continuous with the pockets, and the planetary gears are rotatably received in the pockets and the receiving holes.

It is preferred that a slanted surface is formed on outer surfaces of adjacent regions of the body and the closure member, the slanted surface being slanted towards the rotational axis as it approaches the closure member side from the body side. More preferably, the slanted surface is arranged in such a manner as to intersect outer peripheral portions of the pair of pockets and the pair of pockets are opened outside from the slanted surface. The slanted surface may be formed as a planar surface or as a tapered surface about the rotational axis.

Plural pairs of planetary gears arranged in parallel to the rotational axis may be employed, the gears of each planetary gear pair being in mesh with not only the pair of side gears but also each other. Preferably, the same number of the bolts as the planetary gear pairs are provided, and the planetary gear pairs and the bolts are alternately arranged on generally same sized circumferences about the rotational axis in a circumferential direction thereof.

Exemplary embodiments of the present invention will now be described with reference to the accompanying drawings, in which:
Fig. 1 is an illustration showing one embodiment of the present invention and a sectional view taken on line Y-Y of Fig. 2;
Fig. 2 is a sectional view taken on line X-X of Fig. 1; and
Fig. 3 is a sectional view similar to Fig. 1, showing another embodiment of the present invention.

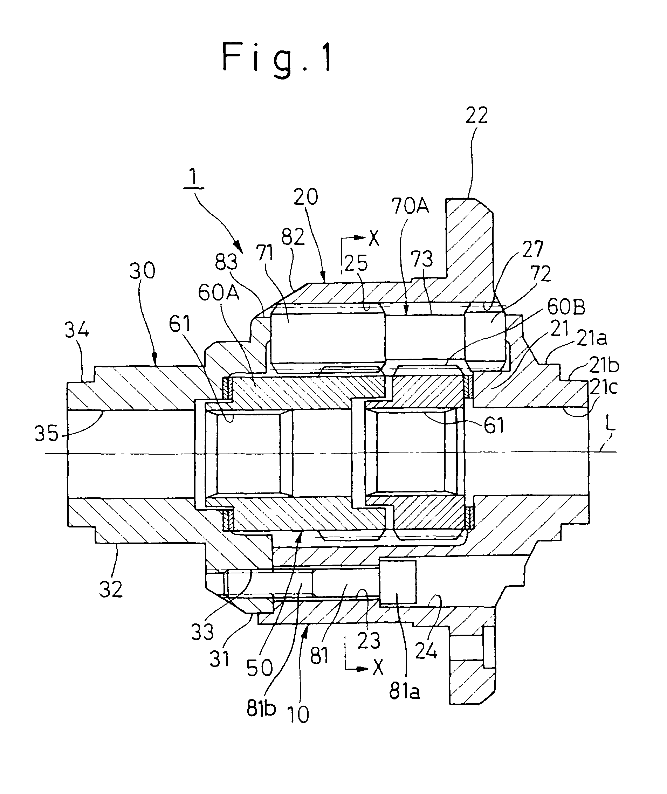

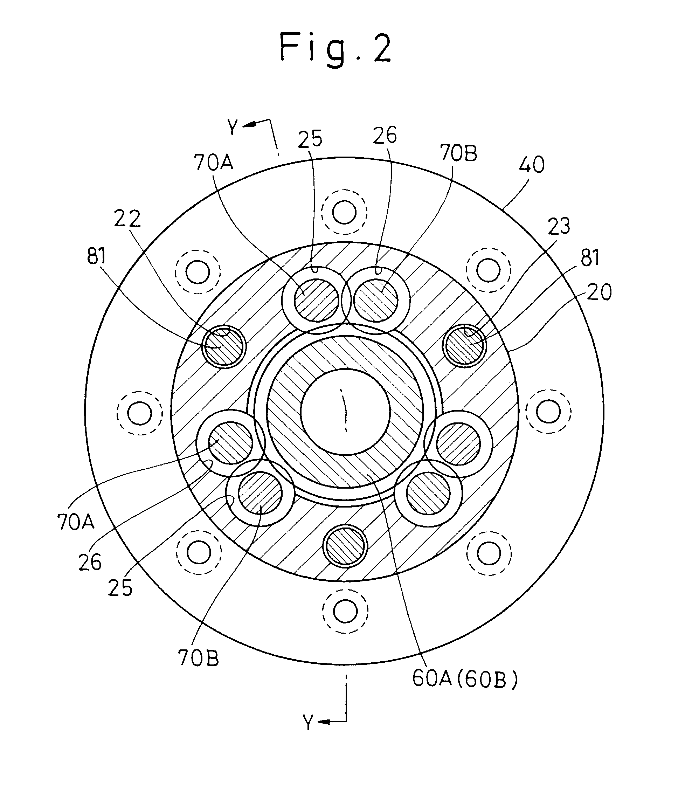

Figs. 1 and 2 show one embodiment of the present invention. A differential gear device 1 according to this embodiment includes a housing 10 driven for rotation about a rotational axis L and a differential gear mechanism 50 received within the housing 10.

The housing 10 comprises a cylinder body 20 and a closure member 30 for closing an opening portion at one end (left-hand end of Fig. 1, hereinafter the terms "left and right" used herein refer to the left-hand side and the right-hand side of Fig. 1) of the body 20.

A bottom portion 21 is formed on a left end portion of the body 20. A journal portion 21a extending on the rotational axis L is formed on a central portion of an outer end portion of the bottom portion 21. An attachment shaft portion 21b is formed on a distal end portion of the journal portion 21a. A flange portion 22 is formed on an outer periphery of the right end portion of the body 20. A ring gear (not shown) is bolted (not shown) to a left end face of the flange portion 22. When this ring gear is driven for rotation by an engine, the housing 10 is driven for rotation about the rotational axis L.

A plurality of insert holes 23 are formed on the body 20 in such a manner as to extend therethrough in parallel to the rotational axis L. Although three insert holes 23 are employed in this embodiment, they may be two, or four or more. The insert holes 23 are equally spacedly arranged on a circumference about the rotational axis L in a circumferential direction. A counter bore 24 is formed on the right opening portion of each insert hole 23. A head portion 81a of the bolt 81 is received in the counter bore 24, while a leg portion 81b of the bolt 81 is inserted in the insert hole 23.

The closure member 30 comprises a circular plate portion 31 slightly smaller in diameter than the body 20 and a journal portion 32 integral with a central portion of a left end face of this circular plate portion 31. The same number of threaded holes 33 as the insert holes 23 are formed on the circular plate portion 31. Although the threaded holes 33 extend through the circular plate portion 31 in this embodiment, they may be blind holes extending from a right end face of the circular plate portion 31 towards a left end face side. The leg portions 81b of the bolts 81 inserted in the insert holes 23 are threadingly engaged with the corresponding threaded holes 33. When the bolts 81 are tightened, the closure member 30 is pushed against and fixed to a left end face of the body 20.

An attachment shaft portion 34 is formed on a distal end portion of the journal portion 32. This attachment shaft portion 34 and the attachment shaft portion 21b of the body 20 are rotatably supported on a differential carrier (not shown) through a bearing (not shown). Owing to this arrangement, the whole differential gear device 1 is rotatably supported on the differential carrier about the rotational axis L.

The differential gear mechanism 50 includes one pair of side gears 60A, 60B and at least one pair of planetary gears 70A, 70B. The pair of side gears 60A, 60B are arranged with their axes aligned to the rotational axis. Three pairs of such planetary gears 70A, 70B are employed in this embodiment. Each planetary gear pair 70A, 70B is arranged on a generally same sized circumference as the circumference on which the insert holes 23 are arranged. Moreover, each planetary gear pair 70A, 70B and the insert holes 23 are alternately arranged in a circumferential direction.

The side gears 60A, 60B are comprises of spur gears or helical gears. Spline holes 61, 61 are formed at central portions of the side gears 60A, 60B. Inner end portions of one output shafts (not shown) are unrotatably engaged with the spline holes 61, 61. The pair of output shafts are rotatably engaged with support holes 21c, 35 which are formed on the bottom portion 21 of the body 20 and the closure member 30, respectively. Because of this feature, the side gears 60A, 60B are rotatably supported on the housing 10 through the output shafts.

The planetary gears 70A, 70B each include a long gear portion 71 formed on one end portion thereof, a short gear portion 72 formed on the other end portion, and a neck portion 73 formed therebetween. The planetary gears 70A, 70B are disposed within the housing 10 in such a manner as to face opposite directions. In other words, the planetary gear 70A is disposed within the housing 10 such that the long gear portion 71 is faced leftwardly and the short gear portion 72 is faced rightwardly, while the planetary gear 70B is disposed such that the long gear portion 71 is faced rightward and the short gear portion 72 is faced leftwardly. Most parts of the planetary gears 70A, 70B are rotatably received in pockets 25, 26, respectively, which are formed on an inner periphery of the body 20. Only right end portions of the planetary gears 70A, 70B are rotatably received in receiving holes 27, 27 (only one is shown) which are continuous with the pockets 25, 26.

The long gear portions 71, 71 of the planetary gears 70A, 70B are in mesh with not only the pair of side gears 60A, 60B but also the short gear portions 72, 72 of the other planetary gears 70B, 70A. Accordingly, planetary gears 70A, 70B are connected such that the side gears 60A, 60B are rotated in opposite directions.

A slanted planar surface (slanted surface) 82 is formed on outer surfaces of adjacent end portions of the body 20 and the closure member 30 such that the slanted planar surface 82 is slanted towards the rotational axis L as it approaches the closure member 30 side from the body 20 side. The same number of such slanted planar surfaces 82 are formed as the planetary gear pairs 70A, 70B. The slanted planar surfaces 82 are arranged at the same positions as the pockets 25, 26 in the circumferential direction of the housing 10. The slanted planar surfaces 82 intersect outer periphery side portions of the left portions of the pockets 25, 26. Consequently, parts on the outer periphery side of the pockets 25, 26 are opened outside from the slanted planar surfaces 82. Particularly, in this embodiment, cutouts 83 are each formed on each crossing portion between each slanted planar surface 82 and each pocket 25, 26. This cutout allows the pockets 25, 26 to be opened outside greatly. Lubrication oil stored in the differential carrier is introduced into the housing 10 through this opened portion so as to be supplied to the meshing regions, rotating regions and sliding regions.

In the differential gear device 1 thus construction, the head portion 81a of the bolt 81 is never projected to an outer end face (left end face) of the closure member 3 because the leg portion 81b of the bolt 81 is threadingly engaged with the threaded hole 33 of the closure member 30. Accordingly, the head portion 81a is not allowed to interfere with the differential carrier when that portion of the differential gear device 1 on the closure member 30 side is inserted in the differential carrier. Therefore, there is no need of making the differential carrier large in size. Moreover, the degree of freedom in design of the differential carrier can be increased.

Particularly, in this embodiment, since the slanted planar surfaces 82 are formed on the body 20 and the closure member 30, that portion of the differential gear device 1 on the closure member 30 side can more easily be inserted in the differential carrier by utilizing those slated planar surfaces. In the case where the head portion 81a of the bolt 81 is disposed on the closure member 30 side, the slanted planar surfaces 82, even if they are employed, are of no use because the head portion 81a of the bolt 81 interferes with the differential carrier.

Since the body 20 is thick in the direction of the rotational axis L, the counter bore 24 can be formed deep therein without sacrificing the strength of the body 20. Therefore, the whole head portion 81a of the bolt 81 can be received in the counter bore 24 and the head portion 81a is never projected from the right end face of the body 20. This makes it possible to prevent the head portion 81a from interfering with differential carrier when the flange portion 22 side is inserted in the differential carrier. It should be noted, however, that even if the head portion 81a projects slightly from the right end face of the body 20 as in the embodiment to be described hereinafter, the head portion 81a never interferes with the differential carrier because the differential carrier is designed such that the flange portion 22, which is the largest in diameter among the remaining portions of the body 20, can be inserted therein.

If a counter bore could be formed in the closure member in the conventional differential gear devices, the projecting amount of the bolt head would be reduced. However, it is practically impossible to formed a deep counter bore in the closure member because it is so thin. For this reason, it is hardly possible for the conventional differential gear devices to reduce the projecting amount of the head portion of the bolt from the closure member.

Since the planetary gears 70A, 70B are partly received in the receiving holes 27 formed in the flange portion 22, the length dimension of the body 20 can be reduced to that extent. This makes it possible to design the differential carrier, in which the differential gear device 1 is inserted, smaller. In other words, the differential gear device 1 can easily be inserted in a differential carrier having a predetermined size.

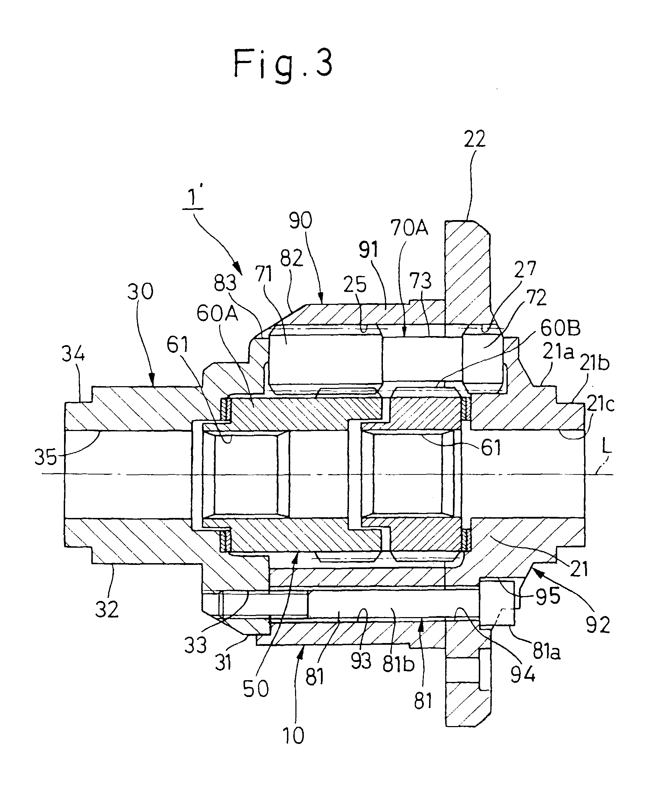

Another embodiment of the present invention will now be described with reference to Fig. 3. In a differential gear device 1' according to this embodiment, a body 90 is employed instead of the body 20. The body 90 is comprised of a sleeve member 91 and an end plate 90.

The sleeve member 91, when the body 20 of the preceding embodiment is divided at the left end face of the flange portion 22 into two left and right portions, has the same configuration as the left portion. That is, the sleeve member 91 is formed as a sleeve whose opposite ends are open. The sleeve member 91 is formed with a through hole 93 which is served as a part of the insert hole 23.

The end plate, when the body 20 of the preceding embodiment is divided at the left end face of the flange portion into two left and right portions, has the same configuration as the right portion. The end plate 92 includes a bottom portion 21 and the flange portion 22. The end plate 92 is formed with a through hole 94 which is served as the remaining part of the insert hole 23. A counter bore 95 for receiving the head portion 81a of the bolt 81 is formed on the outer opening portion of the through hole 94.

The head portion 81a of the bolt 81 is received in the counter bore 95, and the leg portion 81b is threadingly engaged with the threaded hole 33 through the through holes 94, 93. Therefore, when the bolt 81 is tightened, the closure member 30 is pushed against and fixed to the left end face of the sleeve member 91 and the end plate 92 is pushed against and fixed to the right end face of the sleeve member 91 by the head portion 81a of the bolt 81.

It should be noted that the present invention is, by no means, limited to the above embodiments and many changes in design can be made in accordance with necessity.

For example, in the above embodiments, the planetary gears 70A, 70B are arranged in parallel to the rotational axis L. It is an interesting alternative that the planetary gears are arranged in a direction orthogonal to the rotational axis L or bevel gears are used as the planetary gears. Of course, in the case where the bevel gears are used as the planetary gears, bevel gears are used as the side gears, too.

Also, instead of the slanted planar surface 82, a tapered surface, which is gradually reduced in diameter leftwardly about the rotational axis L, may be employed, the tapered surface being curved about the rotational axis L.

In the embodiment of Fig. 3, although the flange portion 22 is formed on the end plate 92, it may be formed on the sleeve member 91.

## Claims

1. A differential gear device comprising:
a housing (10) driven for rotation about a rotational axis (L) thereof, said housing (10) including a sleeve-like body (20; 90) one end portion of which is open and the other end of which has a bottom portion (21), and a closure member (30) for closing the open end of said body (20; 90), said body (20; 90) being provided on an outer periphery of the other end portion thereof with a flange portion (22);
a differential gear mechanism (50) disposed within said housing (10), said differential gear mechanism (50) including a pair of side gears (60A, 60B) rotatably disposed on said housing (10) with an axis thereof aligned with the rotational axis (L) of said housing (10), and a planetary gear (70A, 70B) rotatably disposed within said housing (10) and for connecting said pair of side gears (60A, 60B) together such that said side gears (60A, 60B) can rotate in opposite directions relative to each other; and
a bolt (81) for fixing said closure member (30) to one end face of said body (20; 90), said bolt (81) having a leg portion (81b) and a head portion (81a);
CHARACTERIZED in that said body (20; 90) is formed with an insert hole (23; 93, 94) extending therethrough in parallel to the rotational axis (L), said closure member (30) is formed with a threaded hole (33), and the leg portion (81b) of said bolt (81) is inserted all the way through said insert hole (23; 93, 94) from the other end side of said body (20, 90) and engaged said threaded hole (33).

2. A differential gear device according to claim 1, wherein said bottom portion (21) and said flange portion (22) are integral with said body (20).

3. A differential gear device according to claim 1 or 2, wherein an opening portion of said insert hole (23) on the other end side of said body (20) is formed with a counter bore (24) for receiving the head portion (81a) of said bolt (81).

4. A differential gear device according to claim 1, wherein said body (90) includes a sleeve member (91) whose opposite ends are open and an end plate (92) separate from said sleeve member (91), an opening portion at one end of said sleeve member (91) is closed by said closure member (30), said end plate (92) includes the bottom portion (21) for closing an opening portion at the other end of said sleeve member (91), said insert hole (93,94) is formed in said sleeve member (91) and said end plate (92), and said end plate (92) is pushed against and fixed to said sleeve member (91) by the head portion (81a) of said bolt (81).

5. A differential gear device according to claim 4, wherein an outer opening portion of said insert hole (94) of said end plate (91) is formed with a counter bore (95) for receiving the head portion (81a) of said bolt (81).

6. A differential gear device according to any one of the preceding claims, wherein the differential gear mechanism comprises one or more pairs of planetary gears (70A,70B) arranged in parallel to the rotational axis (L), the gears of the or each said pair of planetary gears (70A,70B) being in mesh with not only said pair of side gears (60A,60B) but also each other.

7. A differential gear device according to claim 6, wherein said body (20;90) is formed on an inner peripheral surface thereof with the same number of pocket pairs (25,26) as said planetary gear pairs (70A,70B) and on the bottom portion (21) with receiving holes (27) continuous with said pockets (25,26) and said planetary gears (70A,70B) are rotatably received in said pockets (25,26) and said receiving holes (27).

8. A differential gear device according to claim 6 or 7, wherein one or more slanted surfaces (82) are formed on outer surfaces of adjacent regions of said body (20;90) and said closure member (30), the or each slanted surface being slanted towards the rotational axis (L) as it approaches said closure member (30) side from said body (20:90) side.

9. A differential gear device according to claim 8, when dependent on claim 7 wherein the or each slanted surface is arranged in such a manner as to intersect an outer peripheral portion of a respective pair of pockets (25,26) to open said pair of pockets (25,26) to the outside of the housing (10).

10. A differential gear device according to claim 8 or 9, wherein the or each slanted surface (82) is tapered about the rotational axis (L).

11. A differential gear device according to claim 8 or 9, comprising a plurality of slanted surfaces (82) which are continuous in a circumferential direction of said body (20;90) in such a manner as to form a tapered surface about the rotational axis (L).

12. A differential gear device according claim 11, wherein the same number of said bolts (81) as said planetary gear pairs (70A,70B) are provided, and said planetary gear pairs (70A,70B) and said bolts (81) are alternately arranged on generally same sized circumferences about the rotational axis (L) in a circumferential direction thereof.

13. A differential gear device comprising:
a housing driven for rotation about a rotational axis thereof, and a differential gear mechanism disposed within the housing; the housing including a sleeve-like body having an open end through which the differential gear mechanism can be assembled into the housing, and a closure member which can be secured across the open end of the body, to hold the differential gear mechanism within the housing;
the closure member being secured to the body by one or more bolts extending through the body and engaged in a threaded hole formed in the closure member.
